# FASCICULE DE BREVET EUROPEEN

(11) **EP 0 738 284 B1**
(45) Date de publication et mention de la délivrance du brevet: **26.07.2000**
(21) Numéro de dépôt: 95906365.2
(22) Date de dépôt: 05.01.1995
(51) Int. Cl.: C08B 11/187, C08B 13/00, C08B 15/06, C08B 33/00, C08B 37/08, B01J 20/32

(54) **DERIVES POLYSACCHARIDIQUES ET LEUR EMPLOI POUR LA PREPARATION DE PHASES STATIONNAIRES CHIRALES UTILES POUR LA SEPARATION D'ISOMERES**
POLYSACCHARIDDERIVATE UND DEREN VERWENDUNG ZUR HERSTELLUNG CHIRALER STATIONÄRER PHASEN ZUR TRENNUNG VON ISOMEREN
POLYSACCHARIDE DERIVATIVES AND THEIR USE FOR PREPARING STATIONARY CHIRAL PHASES SUITABLE FOR SEPARATING ISOMERS

(30) Priorité: 05.01.1994 FR 9400041
(43) Date de publication de la demande: 23.10.1996
(73) Titulaire: CONSERVATOIRE NATIONAL DES ARTS ET METIERS, F-75003 Paris (FR)
(72) Inventeur: OLIVEROS, Laureano, F-75013 Paris (FR); MINGUILLON, Cristina, E-08820 El Prat del Llobregat (ES); LOPEZ, Pilar, E-50007 Saragosse (ES)
(74) Mandataire: Sueur, Yvette
(86) Numéro de dépôt international: FR9500008
(87) Numéro de publication internationale: WO9518833

(56) Documents cités:
- EP-A- 0 281 951
- US-A- 2 748 109
- US-A- 4 539 399
- US-A- 4 565 857
- US-A- 5 302 633
- JOURNAL OF CHROMATOGRAPHY, vol.608, 1992, AMSTERDAM NL pages 421 - 425 I. D. CRUZADO ET AL. 'Chiral separations by capillary electrophoresis using cyclodextrin-containing gels'
- JOURNAL OF POLYMER SCIENCE, POLYMER CHEMISTRY EDITION, vol.30, no.11, 1992, NEW YORK US pages 2303 - 2312 M.-S. LIN ET AL. 'Syntheses and characterizations of allyl cellulose and glycidyl cellulose'
- HIGH POLYMERS VOL. V, CELLULOSE AND CELLULOSE DERIVATIVES, PART II, ED. BY OTT & SPURLIN, SECOND EDITION 1954 pages 763 - 824
- DATABASE WPI Week 8847, Derwent Publications Ltd., London, GB; AN 88-335637 & JP,A,63 250 327 (DAICEL CHEM. IND. KK.) 18 Octobre 1990

## Description

La présente invention concerne de nouveaux dérivés polysaccharidiques et leur emploi pour la préparation de phases stationnaires chirales utiles pour la séparation des isomères optiques, des isomères géométriques ou de polymères de poids moléculaires différents.

Il est connu que, en particulier dans le domaine des médicaments et des produits à usage agricole, l'activité des produits racémiques est différente de celle des isomères.

Généralement, en particulier dans le cas d'isomères optiques, il est connu d'effectuer la séparation par cristallisation fractionnée ou par cristallisation par balancement.

Il est également connu d'effectuer la séparation par application de techniques chromatographiques. En particulier, dans le brevet européen EP-B-0 147 804, il a été montré que des dérivés de la cellulose ayant un groupement contenant un radical aromatique conviennent particulièrement bien pour séparer plus particulièrement des isomères optiques. Ainsi des dérivés de la cellulose ayant un degré de polymérisation de préférence compris entre 10 et 500 dont le degré de substitution par des groupements ayant un noyau aromatique est compris entre 1,8 et 3 conviennent particulièrement bien, lorsqu'ils sont adsorbés sur un support minéral (silice, alumine) ou organique (polymères styréniques, acryliques), pour effectuer la séparation d'isomères optiques par chromatographie.

Parmi ces dérivés de la cellulose peut être plus spécialement cité le triphénylcarbamate de cellulose qui peut être obtenu par action du phénylisocyanate sur la cellulose. Cependant ces dérivés n'ont qu'une application limitée du fait de leur solubilité dans certains solvants. Il en résulte que tous les isomères optiques ne peuvent pas être séparés par chromatographie sur une colonne contenant un tel support.

J. Chromatogr. 608 (1992) 421-425 décrit la préparation de copolymères d'allylcarbamoyle β-cyclodextrine et d'acrylamide et de diacrylamide. Le produit obtenu est un copolymère sous forme de gel dans lequel l'unité chirale est la β-cyclodextrine qui est fixée à la chaîne polymérique qui est essentiellement une chaîne de polyacrylamide. Les unités glucoses fixées sur la chaîne de polyacrylamide ne peuvent porter d'autre substituant. L'énantiosélectivité d'un tel copolymère ne peut donc être ajustée aux produits particuliers à traiter.

EP-A-281 951 décrit un dérivé de polysaccharide utilisé en chromatographie liquide qui porte uniquement des substituants alkylphénylcarbamoyles. Un tel polysaccharide ne présente cependant pas de groupes fonctionnels qui permettraient de le fixer par une liaison chimique sur un support ou de le rendre insoluble par réticulation. Pour la préparation d'une phase stationnaire, le polysaceharide est simplement déposé ou adsorbé sur un support de silice, ce qui limite considérablement le choix de l'éluant. On utilise généralement un mélange d'hexane ou d'heptane avec une faible quantité d'un alcool ou d'un éther. Or les produits pharmaceutiques pour la préparation desquels les phases stationnaires sont très fréquemment utilisées, sont souvent peu ou pas solubles dans de tels éluants.

US-A-4 539 399 décrit une phase stationnaire constituée par un sélecteur chiral qui est la cyclodextrine, fixée sur une silice fonctionnalisée. La réaction de couplage met est jeu un groupe OH de la cyclodextrine et un groupe époxyde ou un brome constituant le groupe actif de la silice. La cyclodextrine ne contient aucun substituant qui permettrait de faire varier l'énantiosélectivité.

US-A-5 302 633 décrit un polysaccharide modifié obtenu par réaction d'un polysaccharide avec un composé vinylique capable de réagir avec un groupe OH du polysaccharide pour former une liaison ester ou une liaison uréthane. Le substituant fixé sur une unité structurale du polysaccharide contient une double liaison directement liée à un groupe activant tel qu'un noyau phénylène, un groupement ester ou un groupement uréthane. La double liaison activée réagit très facilement avec une autre double liaison du poly-saccharide pour réticuler, ou avec une double liaison activée fixée sur un support. Un tel polysaccharide ne porte qu'un seul type de substituant. Lorsqu'il est utilisé pour la préparation d'une phase stationnaire chirale, le même substituant sert à la fois à la polymérisation ou au greffage, et à l'énantiosélectivité. Un nombre important de substituants est préféré pour l'énantiosélectivité. Un nombre plus faible de substituants est préférable pour limiter la réticulation ou la polymérisation, et par conséquent la modification de la structure secondaire du polysaccharide, car il est bien connu qu'une forte modification de la structure secondaire a un effet néfaste sur l'énantiosélectivité de la phase stationnaire. Il est donc difficile de moduler les propriétés du polysaccharide.

La présente invention concerne de nouveaux polysaccharides modifiés, qui permettent la séparation d'isomères optiques, d'isomères géométriques ou de polymères appartenant à des familles chimiques très différentes, et qui se fixent facilement par réticulation sur des supports divers ou par liaison covalente sur une silice fonctionnalisée pour donner des phases stationnaires stables dans différents solvants tels que les hydrocarbures halogénés, les éthers, les esters, les cétones ou les alcools, utilisables tant en phase normale qu'en phase reverse.

Un polysaccharide selon la présente invention est constitué par des unités structurales formant une chaîne linéaire ou ramifiée et qui peuvent être représentées par l'une des formules générales ci-dessous: 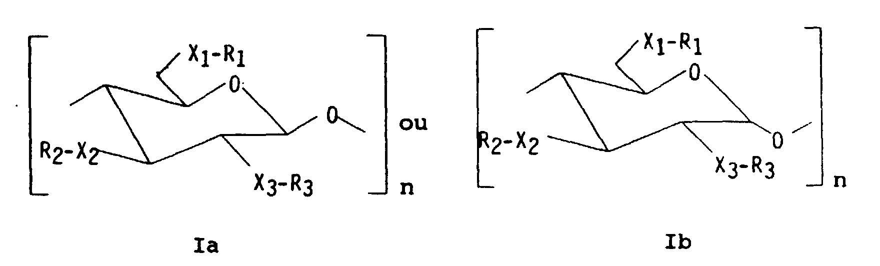 dans lesquelles :
a) les symboles X₁, X₂ et X₃, identiques ou différents, représentent un atome d'oxygène ou le groupement -NH ;
b) chacun des symboles R₁, R₂ et R₃ représente indépendamment :
   - un radical éthylénique ayant la formule générale R-(CH=CH-CH₂)ₘ-A-Y- (II) dans laquelle m est un nombre entier non nul au plus égal à 5, R représente un atome d'hydrogène ou un radical alkyle substitué ou non, linéaire ou ramifié, ayant de 1 à 8 atomes de carbone, Y représente une simple liaison ou un groupement -NH-CO- ou un groupement -NH-CS- ou un groupement -CO-, A représente une simple liaison ou un radical alkylène linéaire ou ramifié ayant de 1 à 21 atomes de carbone, ou un radical arylène ayant de 6 à 18 atomes de carbone ou un radical aralkylène ayant de 7 à 40 atomes de carbone,
   - ou un radical ayant la formule A₂-A₁-CX- (III) dans laquelle X représente un atome d'oxygène ou de soufre, A₁ représente une simple liaison ou un groupement -NH- et A₂ représente un radical aryle ayant de 6 à 24 atomes de carbone ou un radical aralkyle ayant de 7 à 36 atomes de carbone ou un radical alkylaryle ayant de 7 à 18 atomes de carbone,
   - ou un atome d'hydrogène ou un groupe NO₂. n étant un nombre entier compris entre 5 et 2000, étant entendu que dans chaque unité structurale Ia ou Ib, l'un au moins des symboles X₁, X₂ et X₃ représente un atome d'oxygène, et que dans au moins une partie des unités structurales constituant le polysaccharide, l'un au moins des symboles R₁, R₂ ou R₃ représente un radical de formule générale (Il) et l'un au moins des symboles R₁, R₂ ou R₃ représente un radical de formule générale (III).

Les radicaux arylènes ou aryles contenus respectivement dans les radicaux de formule générale (II) et (III) peuvent être éventuellement substitués par un ou plusieurs atomes ou radicaux identiques ou différents choisis parmi les atomes d'halogène, les radicaux alkyles contenant 1 à 4 atomes de carbone, les radicaux alkoxy contenant 1 à 4 atomes de carbone et les groupes nitro. Les radicaux arylènes contenus dans les radicaux de formule générale (Il) sont, de préférence, des radicaux phénylènes ou des radicaux naphtylènes éventuellement substitués par un ou plusieurs atomes ou radicaux identiques ou différents choisis parmi les atomes d'halogène et les radicaux alkyles contenant 1 à 4 atomes de carbone, les radicaux alkyloxy contenant 1 à 4 atomes de carbone et les groupes nitro. Les radicaux aryles contenus dans les radicaux de formule générale (III) sont, de préférence, des radicaux phényles ou des radicaux naphtyles éventuellement substitués par un ou plusieurs atomes ou radicaux identiques ou différents choisis parmi les atomes d'halogène, les radicaux alkyles contenant 1 à 4 atomes de carbone, les radicaux alkyloxy contenant 1 à 4 atomes de carbone et les groupes nitro.

Génèralement, les polysaccharides selon l'invention ont un degré de polymérisation compris entre 5 et 2000 et de préférence entre 10 et 500.

Généralement, les polysaccharides selon l'invention contiennent de 0,05 à 2,95 groupes de formule générale (II) par unité structurale de formule générale (Ia ou Ib), et de 0,05 à 2,95 groupes de formule générale (III) par unité structurale de formule générale (Ia ou Ib).

Généralement, les polysaccharides selon l'invention dérivent de l'amylose, de la cellulose ou du chitosan.

Selon l'invention, les polysaccharides modifiés peuvent être obtenus par action sur un polysaccharide non protégé d'un composé de formule générale :

R-(CH=CH-CH₂)ₘ-A-Y₁ (IV)

dans laquelle R, m et A sont définis comme précédemment et Y₁ représente un atome d'halogène (chlore, brome) ou un groupe -N=C=O ou -N=C=S ou un groupe -CO-Z dans lequel Z représente un atome d'halogène (chlore, brome) pour introduire un radical éthylénique de formule générale (II), et par action d'un isocyanate ou d'un isothiocyanate de formule générale :

A₂-N=C=X (V)

dans laquelle A₂ est défini comme précédemment et X représente un atome d'oxygène ou de soufre ou d'un composé de formule générale :

A₂-A₁-CO-Z₁ (VI)

dans laquelle A₂ et A₁ sont définis comme précédemment, et Z₁ représente un atome d'halogène (chlore, brome) pour introduire un radical de formule générale (III).

Selon l'invention, l'introduction des radicaux de formule générale (II) ou (III) s'effectue dans les conditions habituellement utilisées pour préparer un éther, un ester, un amide, un carbamate, un thiocarbamate, une urée ou une thiourée à partir de l'alcool ou de l'amine correspondant.

L'ordre d'introduction des réactifs de formule générale (IV), (V) ou (VI) influe sur les caractéristiques énantiosélectives des phases stationnaires chirales obtenues à partir des polysaccharides ainsi modifiés.

Généralement, le premier réactif utilisé réagit de préférence avec la fonction alcool primaire de l'unité osidique en position 6 lorsque le polysaccharide de départ est la cellulose ou l'amylose ou sur la fonction amine en position 2 lorsque le polysaccharide de départ est le chitosan.

Les polysaccharides modifiés selon la présente invention sont particulièrement utiles pour effectuer la séparation d'un produit chimique d'un mélange et plus particulièrement la séparation d'un isomère de son mélange racémique. De préférence, les polysaccharides modifiés sont utilisés pour la mise en oeuvre de techniques de séparation par chromatographie telles que la chromatographie en phase liquide, la chromatographie en couche mince ou la chromatographie en phase gazeuse.

Pour la mise en oeuvre de la chromatographie en phase liquide ou en phase gazeuse, il est nécessaire d'utiliser une colonne contenant le polysaccharide modifié éventuellement fixé sur un support.

La présente invention a également pour objet une phase stationnaire chirale contenant un polysaccharide modifié fixé par liaison covalente ou par réticulation sur un support éventuellement fonctionnalisé, le dit polysaccharide étant constitué par des unités structurales formant une chaîne linéaire ou ramifiée et qui peuvent être représentées par l'une des formules générales Ia ou Ib ci-dessus dans lesquelles :
a) les symboles X₁, X₂ et X₃, identiques ou différents, représentent un atome d'oxygène ou le groupement -NH ;
b) les symboles R₁, R₂ et R₃, identiques ou différents, représentent :
   - un radical éthylénique ayant la formule générale R-(CH=CH-CH₂)ₘ-A-Y- (II) dans laquelle m est un nombre entier non nul au plus égal à 5, R représente un atome d'hydrogène ou un radical alkyle substitué ou non, linéaire ou ramifié, ayant de 1 à 8 atomes de carbone, Y représente une simple liaison ou un groupement -NH-CO- ou un groupement -NH-CS- ou un groupement -CO-, A représente une simple liaison ou un radical alkylène linéaire ou ramifié ayant de 1 à 21 atomes de carbone, ou un radical arylène ayant de 6 à 18 atomes de carbone ou un radical aralkylène ayant de 7 à 40 atomes de carbone,
   - ou un radical ayant la formule A₂-A₁-CX- (III) dans laquelle X représente un atome d'oxygène ou de soufre, A₁ représente une simple liaison ou un groupement -NH- et A₂ représente un radical alkyle linéaire ou ramifié ayant de 1 à 24 atomes de carbone ou un radical aryle ayant de 6 à 24 atomes de carbone ou un radical aralkyle ayant de 7 à 36 atomes de carbone ou un radical alkylaryle ayant de 7 à 18 atomes de carbone,
   - ou un atone d'hydrogène ou un groupe NO₂. n étant un nombre entier compris entre 5 et 2000, étant entendu que dans chaque unité structurale Ia ou Ib, l'un au moins des symboles X₁, X₂ et X₃ représente un atome d'oxygène, et que dans au moins une partie des unités structurales constituant le polysaccharide, l'un au moins des symboles R₁, R₂ ou R₃ représente un radical de formule générale (II).

De préférence, le polysaccharide est utilisé sur un support minéral, tel que la silice, l'alumine ou le graphite, ou sur un support organique naturel ou synthétique, tel qu'un polymère acrylique, sur lequel il est fixé soit par liaison covalente lorsque le support a été fonctionnalisé, soit par réticulation du polysaccharide sur le support.

Généralement, la fixation ou la réticulation se font par une réaction de polymérisation par l'intermédiaire des doubles liaisons carbone-carbone. De préférence, la fixation ou la réticulation s'effectue par chauffage, à une température voisine généralement de 100°C, éventuellement en présence d'un initiateur de polymérisation tel que l'α,α'-azoisobutyronitrile.

Généralement, on utilise des particules de support d'une granulométrie comprise entre 3 et 60 µm dont la porosité peut varier de 6 à 400 nm.

La quantité de polysaccharide lié au support est comprise entre 1 et 50 % en poids et de préférence entre 5 et 30 %.

L'efficacité d'une colonne contenant un polysaccharide modifié selon la présente invention peut être caractérisée par le facteur de capacité du soluté (k'1) qui se mesure par le rapport (tr-to)/to dans lequel tr représente le temps de rétention du soluté 1 et to représente le temps de rétention d'un produit non retenu, et par le facteur de sélectivité α qui représente la rétention relative des solutés 1 et 2 et qui s'exprime par le rapport k'2/k'1.

Pour obtenir une séparation satisfaisante, il est particulièrement avantageux d'utiliser un polysaccharide modifié pour lequel k'1 est inférieur ou égal à 5 et α est supérieur à 1.

Les polysaccharides modifiés fixés sur un support convenable selon la présente invention peuvent être utilisés pour le remplissage de colonnes chromatographiques. Les colonnes chromatographiques remplies avec des phases stationnaires préparées à partir des polysaccharides modifiés peuvent indifféremment être utilisées en phase normale ou en phase reverse.

Pour la mise en oeuvre de la chromatographie en couche mince, on utilise une couche ayant de 0,1 à 1 mm d'épaisseur constituée par un polysaccharide fixé sur un support convenable dont la granulométrie peut varier de 0,01 mm à 0,2 mm associées à un liant.

Une phase stationnaire chirale de la présente invention peut également être constituée par un polysaccharide modifié obtenu sous forme de microbilles par précipitation de sa solution à l'aide d'un non solvant. Le polysaccharide constituant ces microbilles est ensuite réticulé par chauffage à sec vers 100°C, éventuellement en présence d'un initiateur de polymérisation tel que l'α,α'-azoisobutyronitrile, ce qui diminue ou supprime sa solubilité dans les solvants organiques. La phase stationnaire chirale ainsi obtenue peut être utilisée pour le remplissage de colonnes chromatographiques ou comme adsorbant pour la chromatographie en couche mince. Ces colonnes et plaques chromatographiques peuvent être utilisées en phase normale et en phase reverse.

Une phase stationnaire chirale contenant un polysaccharide fixé sur un support ou sous forme de microbilles dans lequel l'un au moins des symboles R₁, R₂ ou R₃ représente un radical de formule générale (III) dans laquelle A₂ représente un radical aryle ayant de 6 à 24 atomes de carbone ou un radical aralkyle ayant de 7 à 36 atomes de carbone ou un radical alkylaryle ayant de 7 à 18 atomes de carbone est particulièrement préférée.

Les exemples suivants illustrent la présente invention.

### EXEMPLE 1

On met en suspension 0,5 g de cellulose native (commercialisée par la société Merck), contenant 3,1 mM de motifs glucose, dans 15 cm³ de toluène. Après déshydratation de la cellulose par distillation azéotropique jusqu'à siccité, on ajoute 40 cm³ de pyridine. Après distillation de 15 cm³ de solvant et refroidissement, on ajoute 1,32 g de chlorure de 10-undécénoyle (6,5 mM). On chauffe au reflux pendant 1 heure et on effectue un prélèvement dont l'analyse (C = 67,55 % ; H = 9,27 %) montre que le degré de substitution est 1,8. On ajoute alors 0,850 g de 3,5-diméthylphénylisocyanate (5,6 mM) et on chauffe au reflux pendant 1 nuit. Après filtration à chaud sur verre fritté n° 2, le mélange réactionnel est versé dans 100 cm³ de méthanol. Après filtration, le précipité est dissous dans le minimum de pyridine. La solution est filtrée sur verre fritté n° 2 et le filtrat est versé dans un mélange méthanol-eau (1-1 en volumes). Après filtration et lavage au méthanol, on obtient un produit dont les caractéristiques sont les suivantes :
- analyse élémentaire : C = 68,58% ; H = 8,67% ; N = 2,12%
- degré de substitution : 1,8 (undécénoyle), 0,9 (3,5-diméthylphénylcarbamate).

### EXEMPLE 2

Dans les conditions de l'exemple 1, on déshydrate et on traite par de la pyridine, 0,83 g de cellulose microcristalline commercialisée par la société Merck sous la marque Avicel®, contenant 5,1 mM de motifs glucose.

On ajoute ensuite du 3,5-diméthylphénylisocyanate (2,5 mM par motif glucose). On chauffe au reflux pendant une nuit et on effectue un prélèvement dont l'analyse (C = 62,60 % ; H % = 6,25 % ; N = 6,36 %) montre que le degré de substitution est 1,8. On ajoute ensuite du chlorure de 10-undécénoyle (5,5 mM) et on chauffe pendant 1 heure au reflux. Après traitement comme dans l'exemple 1, on obtient un produit dont les caractéristiques sont les suivantes :
- analyse élémentaire : C = 66,15% ; H = 7,70% ; N = 5,15%
- degré de substitution : 1,8 (3,5-dimethylphénylcarbamate), 0,8 (10-undécénoyle).

### EXEMPLE 3

A partir de 0,5 g de cellulose microcristalline commercialisée par la société Merck sous la marque Avicel®, contenant 3,1 mM de motifs glucose, en opérant dans les conditions décrites dans l'exemple 1, et en utilisant d'abord le chlorure de 10-undécénoyle (3,7 mM), on obtient un produit dont le degré de substitution est égal à 1, puis en utilisant du 3,5-diméthylphénylisocyanate (7,7 mM), on obtient un produit dont les caractéristiques sont les suivantes :
- analyse élémentaire : C = 65,38% ; H = 7,43% ; N = 4,10%
- degré de substitution : 1 (10-undécénoyle) ; 1,6 (3,5-diméthylphénylcarbamate).

### EXEMPLE 4

Dans les conditions de l'exemple 1, on déshydrate et on traite par de la pyridine, 1 g de cellulose microcristalline commercialisée par la société Merck sous la marque Avicel®, contenant 6,2 mM de motifs glucose.

On ajoute ensuite, à une température voisine de 20°C, de l'allylisocyanate (9,3 mM, soit 1,5 mM par motif glucose). On chauffe au reflux pendant 1 nuit et on effectue un prélèvement dont l'analyse (C = 43,76 % ; H = 6,31 % ; N = 1,74 %) montre que le degré de substitution est 0,2. On ajoute ensuite du 3,5-diméthylphénylisocyanate (18,6 mM soit 3 mM par motif glucose) et on chauffe au reflux pendant une nuit. Après traitement comme dans l'exemple 1, on obtient un produit dont les caractéristiques sont les suivantes :
- analyse élémentaire : C = 59,34% ; H = 6,94% ; N = 6,15%
- degré de substitution : 0,2 (allylcarbamate) ; 1,7 (3,5-diméthylphénylcarbamate).

### EXEMPLE 5

Dans les conditions de l'exemple 1, on déshydrate et on traite par de la pyridine, 2 g de cellulose microcristalline commercialisée par la société Merck sous la marque Avicel®, contenant 12,3 mM de motifs glucose.

On ajoute ensuite du chlorure de 10-undécénoyle (5 mM soit 0,4 mM par motif glucose). On chauffe 1 heure au reflux et effectue un prélèvement (C = 50,47 % ; H = 7,27 %) qui montre que le degré de substitution est 0,2. On ajoute alors du 3,5-diméthylphénylisocyanate (3,5 mM par motif glucose) et on chauffe au reflux pendant une nuit. Après traitement comme dans l'exemple 1, on obtient un produit dont les caractéristiques sont les suivantes :
- analyse élémentaire : C = 66,11% ; H = 6,60% ; N = 6,48%
- degré de substitution : 0,2 (10-undécénoyle) ; 2,8 (3,5-diméthylphénylcarbamate).

### EXEMPLE 6

On déshydrate 0,84 g d'amylose, commercialisé par la société Fluka, contenant 5,2 mM de motifs glucose, dans les conditions de l'exemple 1. Le produit est repris par 80 cm³ de pyridine et chauffé pour éliminer 30 cm³ de solvant par distillation. On ajoute ensuite 1,16 g de chlorure de 10-undécénoyle (5,7 mM) et on chauffe pendant 1 heure au reflux. Après prélèvement d'un échantillon pour analyse (C = 64,78 % ; H = 8,89 %), on ajoute du 3,5-diméthylphénylisocyanate (1,91 g, soit 13 mM), et on chauffe au reflux pendant une nuit. Après traitement comme dans l'exemple 1(ex2), on obtient un produit dont les caractéristiques sont les suivantes :
- analyse élémentaire : C = 67,49% ; H = 7,53% ; N = 4,05%
- degré de substitution : 1,1 (10-undécénoyle) ; 1,8 (3,5-diméthylphénylcarbamate).

### EXEMPLE 7

Dans les conditions de l'exemple 6, on déshydrate et on traite par de la pyridine 0,8 g de chitosan bas poids moléculaire commercialisé par la société Fluka, contenant 5,5 mM de motifs 2-amino-2-déoxyglucose. On ajoute ensuite 5 g de 3,5-diméthylphènylisocyanate (34 mM), et on chauffe au reflux pendant 24 heures. Après prélèvement d'un échantillon pour analyse (C = 63,73 % ; H = 5,95 % ; N = 8,89 %), on ajoute 5 g de chlorure de 10-undécénoyle (10 mM) et on chauffe pendant 1 heure au reflux. Après traitement comme dans l'exemple 1(ex2), on obtient un produit dont les caractéristiques sont les suivantes :
- analyse élémentaire : c = 65,36% ; H = 6,28% ; N = 8,01%
- degré de substitution : 2,2 (3,5-diméthylphénylcarbamate) ; 0,4 (10-undécénoyle).

### EXEMPLE 8

5 g d'acétate de cellulose commercialisé par la société Aldrich sous la référence 18,095-5 contenant 39 % en poids de groupes acétates, sont déshydratés et traités par la pyridine comme décrit dans l'exemple 1. On ajoute à la température ambiante, 3,2 g de chlorure de 10-undécénoyle. Après chauffage au reflux pendant 90 min, et filtration à chaud sur verre fritté n° 2, le mélange réactionnel est versé dans un mélange de 350 cm³ de méthanol et 100 cm³ d'eau. Le solide obtenu est filtré, puis dissous dans de l'acétone et reprécipité dans le méthanol. Après filtration, lavage au méthanol et séchage, on obtient un produit dont les caractéristiques sont les suivantes ;
- analyse élémentaire : C = 57,24 % ; H = 7,07 %
- degré de substitution : 2,4 (acétate) ; 0,55 (undécénoyle)

### EXEMPLE 9

Dans les conditions de l'exemple 1, on déshydrate et on traite par de la pyridine, 1,5 g de cellulose microcristalline commercialisée par la société Merck sous la marque Avicel®, contenant 9,3 mM de motifs glucose.

On ajoute ensuite 3,05 g de chlorure d'oléolyle (5,7 mM) et on chauffe à reflux pendant 1 heure. Après prélèvement d'un échantillon pour analyse, on ajoute 3,42 g de 3,5-diméthylphénylisocyanate (23,3 mM, soit 2,5 mM par motif glucose) et on chauffe à reflux pendant 3 heures. Après traitement comme dans l'exemple 1(ex2), on obtient un produit dont les caractéristiques sont les suivantes :
- analyse élémentaire: C = 69,16 % ; H = 10,80 % ; N = 3,42 %).
- degré de substitution : 0,9 (oléyle) ; 1,53 (3,5-diméthylphénylcarbamate).

Les phases stationnaires chirales peuvent être préparées de la manière suivante :

On dissout le dérivé polysaccharidique (5 à 30 % en poids par rapport au support) dans du chloroforme ou dans un mélange chloroforme-pyridine. Après filtration sur verre fritté, on ajoute le support. La solution est soumise pendant quelques minutes aux ultra-sons puis le solvant est évaporé sous pression réduite à une température comprise entre 30 et 40°C jusqu'à siccité. La polymérisation est effectuée à sec à une température voisine de 100°C en présence ou non de 10 % en poids par rapport au dérivé polysaccharidique d'un initiateur de polymérisation tel que l'α, α'-azoisobutyronitrile. Le produit est repris par le chloroforme, agité pendant une nuit à une température voisine de 20°C puis chauffé au reflux pendant 2 heures. Après filtration sur verre fritté et lavage au chloroforme, le filtrat est concentré à sec, puis pesé. Le poids du résidu obtenu permet de déterminer la quantité de polysaccharide fixé sur le support.

Dans les exemples suivants sont décrites des phases stationnaires chirales obtenues à partir des polysaccharides décrits dans les exemples 1 à 9 et de différents supports.

### EXEMPLE A

En opérant comme indiqué ci-dessus, en utilisant le polysaccharide obtenu à l'exemple 1 et une silice sphérique fonctionnalisée dont la granulométrie est de 5 µm et la porosité de 500 Å, comme support, à raison de 11 % en poids de polysaccharide par rapport au support, on obtient une phase stationnaire chirale dont les caractéristiques sont les suivantes :
- analyse élémentaire : C = 6,74 % ; H = 0,88 % ; N = 0,35 %
- teneur en sélecteur chiral : 9,0 % en poids.

La silice fonctionnalisée peut être préparée de la manière suivante :

On déshydrate 10 g de silice sphérique (5 µm ; 500 Å, commercialisée sous la marque Nucleosil®, par la société Marcherey-Nagel) en suspension dans 160 cm³ de toluène par distillation d'un volume de 60 cm³. On ajoute alors 6 cm³ d'allyltriéthoxysilane, puis on chauffe au reflux pendant 3 heures. L'analyse d'un prélèvement (C = 0,62 % ; H < 30 %) montre que le produit contient 0,17 mM de restes allyles par gramme de produit. Pour désactiver les groupements silanols restants, on ajoute 4 cm³ d'hexaméthyldisilazane, puis on chauffe au reflux pendant 45 minutes. Après filtration sur verre fritté n° 3, lavages successifs par du toluène, de l'acétone, de l'eau, de l'éthanol, de l'acétone et de l'éther diéthylique, on obtient un produit dont les caractéristiques sont les suivantes :
- analyse élémentaire : C = 0,86 % ; H < 0,30 %.

### EXEMPLE B

En opérant comme indiqué ci-dessus, nais en utilisant le polysaccharide obtenu à l'exemple 2 et une silice sphérique fonctionnalisée dont la granulométrie est de 5 µm et la porosité de 100 Å, comme support, à raison de 50 % en poids de polysaccharide par rapport au support, on obtient une phase stationnaire chirale dont les caractéristiques sont les suivantes :
- analyse élémentaire : C = 20,20% ; H = 2,81% ; N = 1,37%
- teneur en sélecteur chiral : 26 % en poids.

La silice fonctionnalisée a été obtenue de la même manière que dans l'exemple A, mais à partir de la silice 5 µm, 100 Å, commercialisée sous la marque Nucleosil®, par la société Marcherey-Nagel.

### EXEMPLE C

En opérant comme indiqué ci-dessus, mais en utilisant le polysaccharide obtenu à l'exemple 3 et de la silice fonctionnalisée telle qu'obtenue à l'exemple B, comme support, à raison de 25 % en poids de polysaccharide par rapport au support, on obtient une phase stationnaire chirale dont les caractéristiques sont les suivantes :
- analyse élémentaire : C = 15,58% ; H = 2,02% ; N = 0,94%
- teneur en sélecteur chiral : 21,0 % en poids.

### EXEMPLE D

En opérant comme indiqué ci-dessus, mais en utilisant le polysaccharide obtenu à l'exemple 4 et de la silice fonctionnalisée telle qu'obtenue à l'exemple B comme support, à raison de 25 % en poids de polysaccharide par rapport au support, on obtient une phase stationnaire chirale dont les caractéristiques sont les suivantes :
- analyse élémentaire : C = 12,35% ; H = 1,92% ; N = 1,06%
- teneur en sélecteur chiral : 16,1 % en poids.

### EXEMPLE E

En opérant comme indiqué ci-dessus, mais en utilisant le polysaccharide obtenu à l'exemple 5 et de la silice fonctionnalisée telle qu'obtenue selon l'exemple B comme support, à raison de 20 % en poids de polysaccharide par rapport au support, on obtient une phase stationnaire chirale dont les caractéristiques sont les suivantes :
- analyse élémentaire : C = 11,38% ; H = 1,89% ; N = 0,79%
- teneur en sélecteur chiral : 12 % en poids.

### EXEMPLE F

En opérant comme indiqué ci-dessus, mais en utilisant le polysaccharide obtenu à l'exemple 3 et du graphite (250 Å; commercialisé sous la marque Hypercarb®, par la société Shandon), comme support, à raison de 25 % du poids de polysaccharide par rapport au support, on obtient une phase chirale stationnaire dont les caractéristiques sont les suivantes :
- analyse élémentaire : N = 0,80 %
- teneur en sélecteur chiral : 20 % en poids.

### EXEMPLE G

En opérant comme indiqué ci-dessus, mais en utilisant le polysaccharide obtenu à l'exemple 3 et de l'alumine (Sphérisorb® 5 µm, A5Y), comme support, à raison de 25 % du poids de polysaccharide par rapport au support, on obtient une phase chirale stationnaire dont les caractéristiques sont les suivantes :
- analyse élémentaire : C = 12,48 % ; H = 1,83 % ; N = 0,84 %
- teneur en sélecteur chiral : 20 % en poids.

### EXEMPLE H

En opérant comme indiqué ci-dessus, mais en utilisant le polysaccharide obtenu à l'exemple 6 et de la silice fonctionnalisée telle qu'obtenue dans l'exemple B comme support, à raison de 20 % du poids de polysaccharide, on obtient une phase chirale stationnaire dont les caractéristiques sont les suivantes :
- analyse élémentaire : C = 13,84 % ; H = 2,28 % ; N = 0,73 %
- teneur en sélecteur chiral : 17,6 % en poids.

### EXEMPLE I

En opérant comme indiqué ci-dessus, mais en utilisant le polysaccharide obtenu à l'exemple 7 et de la silice fonctionnalisée telle qu'obtenue dans l'exemple B comme support, à raison de 20 % du poids de polysaccharide, on obtient une phase chirale stationnaire dont les caractéristiques sont les suivantes :
- analyse élémentaire : C = 11,45 % ; H = 1,78 % ; N = 1,21 %
- teneur en sélecteur chiral : 15 % en poids.

### EXEMPLE J

En opérant comme indiqué ci-dessus, mais en utilisant le polysaccharide obtenu à l'exemple 8 et de la silice fonctionnalisée telle qu'obtenue dans l'exemple B comme support, à raison de 25 % du poids de polysaccharide, on obtient une phase chirale stationnaire dont les caractéristiques sont les suivantes :
- analyse élémentaire : : C = 13,13 % ; H = 2,29 %.
- teneur en sélecteur chiral : 17 % en poids.

### EXEMPLE K

En opérant comme indiqué ci-dessus, mais en utilisant le polysaccharide obtenu à l'exemple 9 et de la silice fonctionnalisée telle qu'obtenue dans l'exemple B comme support, à raison de 20 % du poids de polysaccharide, on obtient une phase chirale stationnaire dont les caractéristiques sont les suivantes :
- analyse élémentaire : C = 14,03 % ; H = 2,53 % ; N = 0,64 %
- teneur en sélecteur chiral : 15 % en poids.

### EXEMPLE L

En opérant comme indiqué ci-dessus, mais en utilisant le polysaccharide obtenu à l'exemple 3 et de la silice (5 µ, 100 Å, commercialisée sous la marque Nucleosil®, par la société Marcherey-Nagel), comme support, à raison de 20 % du poids de polysaccharide, on obtient une phase chirale stationnaire dont les caractéristiques sont les suivantes :
- analyse élémentaire : C = 12,84 % ; H = 2,02 % ; N = 0,90 %
- teneur en sélecteur chiral : 18 %.

### EXEMPLE M

En opérant comme indiqué ci-dessus, mais en utilisant le polysaccharide obtenu à l'exemple 3 et de la silice dont on a désactivé les groupes silanol comme support, à raison de 20 % du poids de polysaccharide, on obtient une phase chirale stationnaire dont les caractéristiques sont les suivantes :
- analyse élémentaire : C = 12,65 % ; H = 2,14 % ; N = 0,71 %
- teneur en sélecteur chiral : 15 % en poids.

La silice dont on a désactivé les groupes silanol est préparée de la manière suivante :

On déshydrate 2,2 g de silice (5 µm, 100 Å, commercialisée sous la marque Nucleosil®, par la société Marcherey-Nagel), par distillation azéotropique comme indiqué dans l'exemple A. On ajoute ensuite 2 cm³ d'hexaméthyldisilazane et on chauffe à reflux pendant 2 heures. Après filtration et lavage comme indiqué dans l'exemple A, on obtient un produit dont les caractéristiques sont les suivantes :
- analyse élémentaire : C = 3,63 % ; H = 1,21%.

Dans le tableau suivant sont rassemblés les résultats qui ont été obtenus pour la séparation des isomères d'un produit racémique par chromatographie liquide en utilisant les phases stationnaires chirales selon l'invention en phase normale ou en phase reverse.

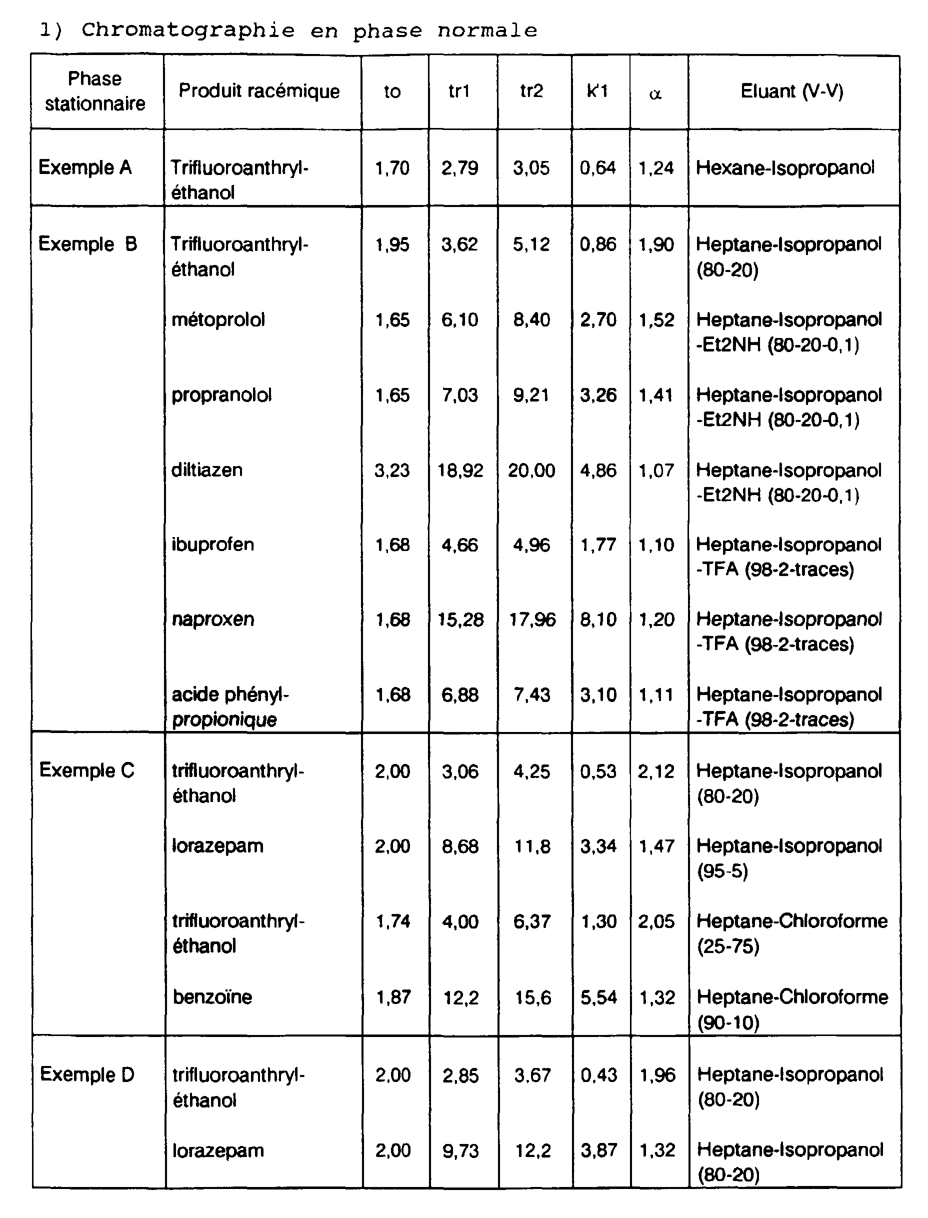

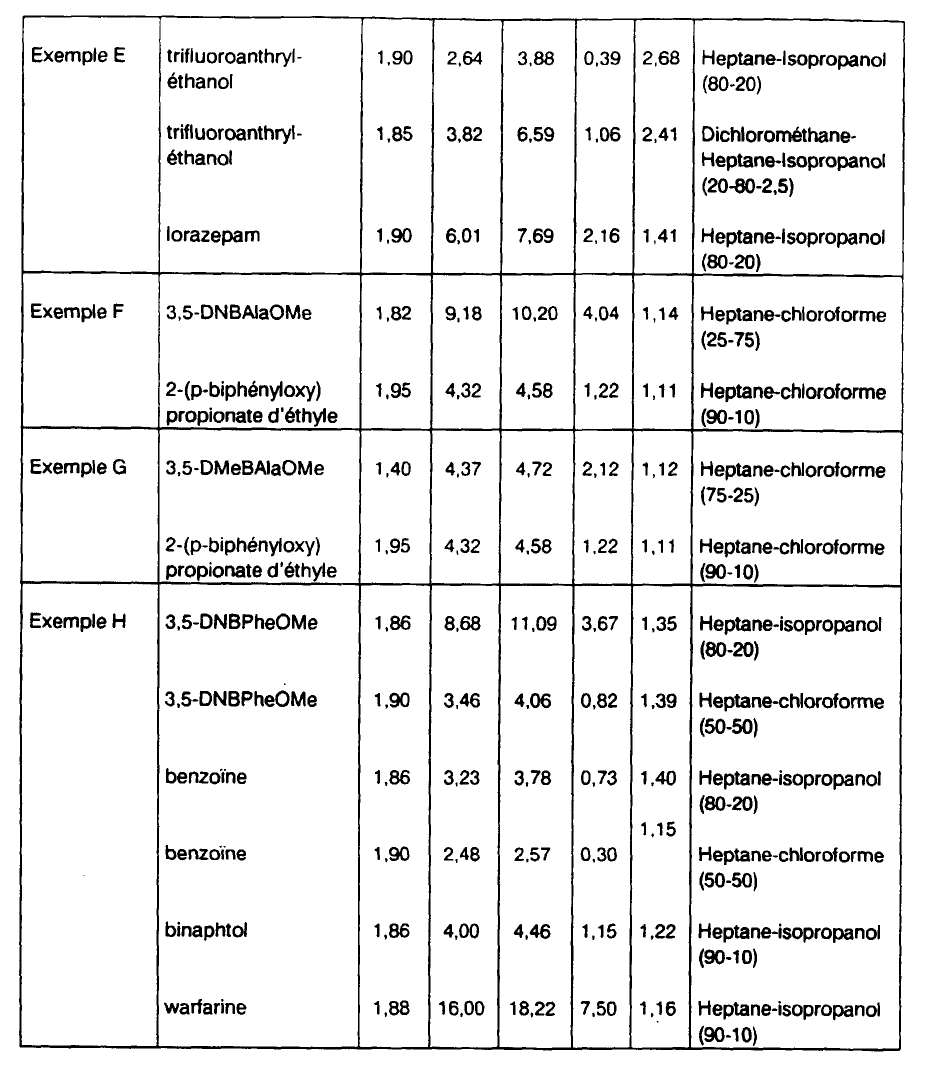

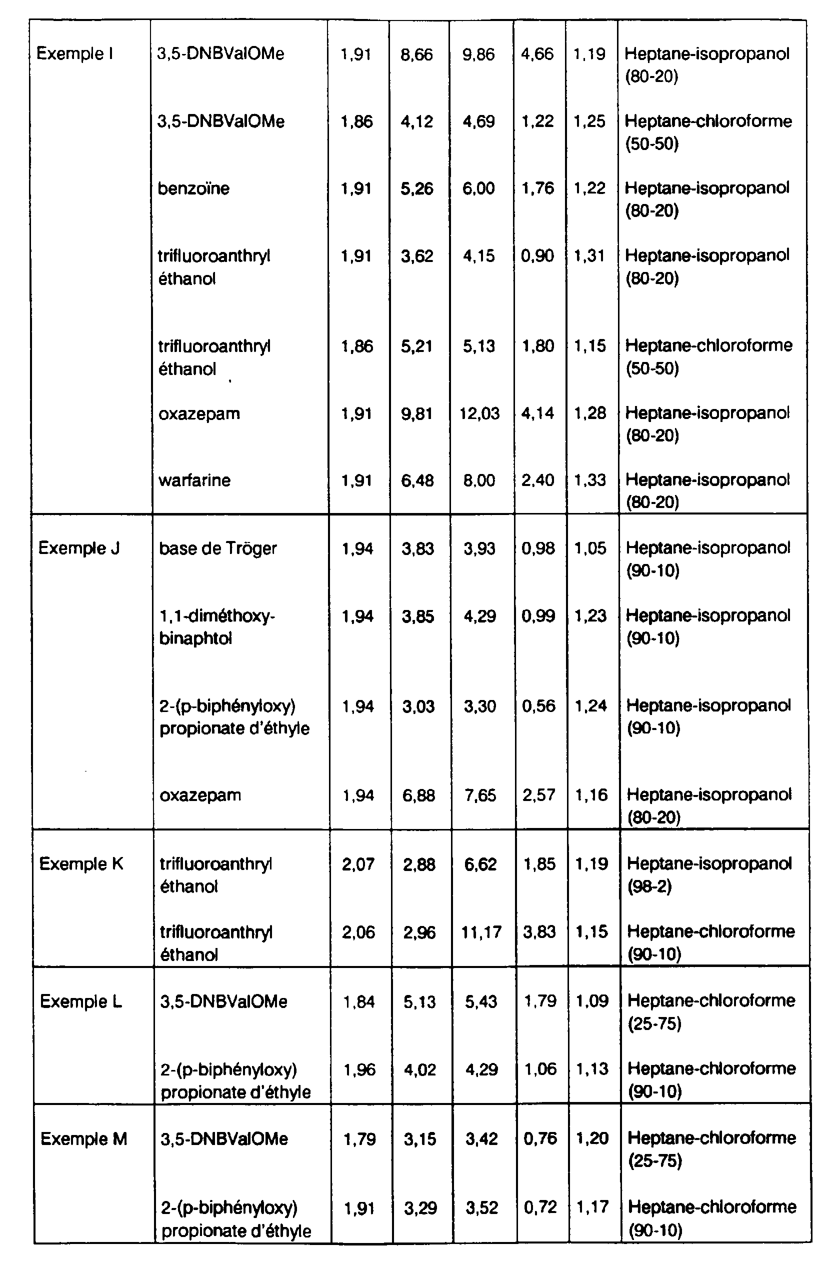

### 2) Chromatographie en phase reverse

| Phase stationnaire | Produit racémique | to | tr1 | tr2 | k'1 | α | Eluant |
|---|---|---|---|---|---|---|---|
| Exemple B | lorazepam | 0,90 | 4,15 | 4,50 | 3,61 | 1,11 | Méthanol-Eau (80-20) |
| | lormetazepam | 0,90 | 5,27 | 5,79 | 4,86 | 1,12 | Méthanol-Eau (80-20) |
| | benzoïne | 0,90 | 3,40 | 3,74 | 2,78 | 1,14 | Méthanol-Eau (80-20) |
| | base de Tröger | 0,90 | 8,30 | 9,56 | 8,22 | 1,17 | Méthanol-Eau (80-20) |
| | 2(p-biphényloxy) propionate d'éthyle | 0,90 | 10,00 | 11,20 | 10,11 | 1,13 | Méthanol-Eau (80-20) |
| Exemple E | trifluoroanthryléthanol | 1,90 | 4,55 | 5,86 | 1,39 | 1,49 | Méthanol-Eau (80-20) |
| | lorazepam | 1,90 | 3,05 | 3,55 | 0,61 | 1,43 | Méthanol-Eau (80-20) |
| | lormetazepam | 1,90 | 3,29 | 3,67 | 0,73 | 1,27 | Méthanol-Eau (80-20) |
| | benzoïne | 1,90 | 2,82 | 2,96 | 0,48 | 1,15 | Méthanol-Eau (80-20) |
| | trans-stilbène oxyde | 1,90 | 5,71 | 7,31 | 1,42 | 1,42 | Méthanol-Eau (80-20) |
| | 2(p-biphényloxy) propionate d'éthyle | 1,90 | 3,31 | 3,48 | 0,74 | 1,12 | Méthanol-Eau (80-20) |
| Exemple F | lormetazepam | 1,93 | 9,76 | 11,79 | 4,05 | 1,26 | Acétonitrile-Eau (40-60) |
| | warfarine | 1,80 | 4,71 | 6,60 | 1,62 | 1,65 | Acétonitrile-Eau (40-60) |
| | pindolol | 1,80 | 2,26 | 2,61 | 0.26 | 1,76 | Acétonitrile-Tampon phosphate 0,03M, pH 5,8 (60-40) |

## Revendications

1. Polysaccharide constitué par des unités structurales formant une chaîne linéaire ou ramifiée et qui peuvent être représentées par l'une des formules générales ci-dessous: 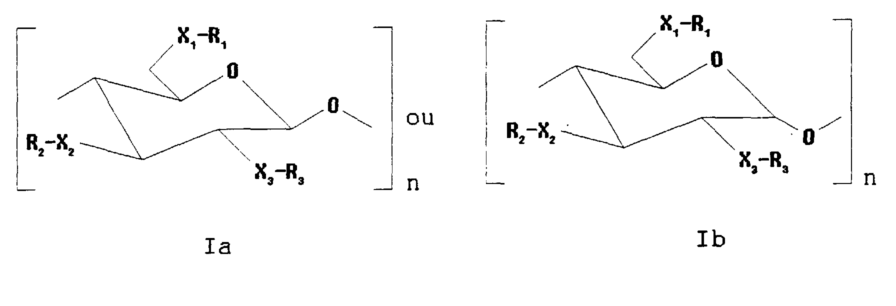 dans lesquelles :
a) les symboles X₁, X₂ et X₃, identiques ou différents, représentent un atome d'oxygène ou le groupement -NH ;
b) chacun des symboles R₁, R₂ et R₃ représentent indépendamment :
- un radical éthylénique ayant la formule générale R- (CH=CH-CH₂)ₘ-A-Y- (II) dans laquelle m est un nombre entier non nul au plus égal à 5, R représente un atome d'hydrogène ou un radical alkyle substitué ou non, linéaire ou ramifié, ayant de 1 à 8 atomes de carbone, Y représente une simple liaison ou un groupement -NH-CO- ou un groupement -NH-CS- ou un groupement -CO-, A représente une simple liaison ou un radical alkylène linéaire ou ramifié ayant de 1 à 21 atomes de carbone, ou un radical arylène ayant de 6 à 18 atomes de carbone et portant éventuellement au moins un substituant choisi parmi les atomes d'halogène, les radicaux alkyles contenant 1 à 4 atomes de carbone, les radicaux alkoxy contenant 1 à 4 atomes de carbone et les groupes nitro, ou un radical aralkylène ayant de 7 à 40 atomes de carbone,
- ou un radical ayant la formule A₂-A₁-CX- (III) dans laquelle X représente un atome d'oxygène ou de soufre, A₁ représente une simple liaison ou un groupement -NH- et A₂ représente un radical aryle ayant de 6 à 24 atomes de carbone et portant éventuellement au moins un substituant choisi parmi les atomes d'halogène, les radicaux alkyles contenant 1 à 4 atomes de carbone, les radicaux alkoxy contenant 1 à 4 atomes de carbone et les groupes nitro ou un radical aralkyle ayant de 7 à 36 atomes de carbone ou un radical alkylaryle ayant de 7 à 18 atomes de carbone,
- ou un atome d'hydrogène ou un groupe NO₂, n étant un nombre entier compris entre 5 et 2000, étant entendu que dans chaque unité structurale Ia ou Ib, l'un au moins des symboles X₁, X₂ et X₃ représente un atome d'oxygène, et que dans au moins une partie des unités structurales constituant le polysaccharide, l'un au moins des symboles R₁, R₂ ou R₃ représente un radical de formule générale (II) et l'un au moins des symboles R₁, R₂ ou R₃ représente un radical de formule générale (III).

2. Polysaccharide selon la revendication 1 caractérisé en ce que les radicaux aryles sont des radicaux phényles ou naphtyles et/ou les radicaux arylènes sont des radicaux phénylènes ou naphtylènes.

3. Polysaccharide selon l'une des revendications 1 ou 2, caractérisé en ce que le degré de polymérisation est compris entre 5 et 2000.

4. Polysaccharide selon l'une des revendications 1 à 3, caractérisé en ce qu'il contient de 0.05 à 2,95 groupes de formule générale (II) par unité structurale et de 0,05 à 2,95 groupes de formule générale (III) par unité structurale.

5. Phase stationnaire chirale utile pour la séparation des isomères d'un composé racémique selon les techniques chromatographiques, suceptible d'être obtenue à partir d'un polysaccharide fixé par liaison covalente ou par réticulation sur un support éventuellement fonctionnalisé, ledit polysaccharide étant choisi parmi les polysaccharides définis dans la revendication 1, étant entendu que A₂ peut être choisi en outre parmi les radicaux alkyles linéaires ou ramifiés ayant de 1 à 24 atomes de carbone.

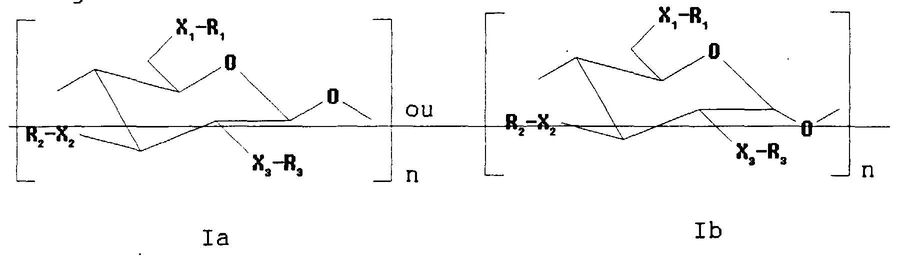

6. Phase stationnaire chirale selon la revendication 5, caractérisée en ce que dans la formule du polysaccharide, l'un au moins des symboles R₁, R₂ ou R₃ représente un radical de formule générale (III) dans lequel A₂ représente un radical aryle ayant de 6 à 24 atomes de carbone ou un radical aralkyle ayant de 7 à 36 atomes de carbone ou un radical alkylaryle ayant de 7 à 18 atomes de carbone.

7. Phase stationnaire chirale selon l'une des revendications 5 ou 6, caractérisée en ce que le support est un support minéral ou organique.

8. Phase stationnaire chirale selon la revendication 7, caractérisée en ce que le support minéral est choisi parmi la silice, l'alumine et le graphite.

9. Phase stationnaire chirale selon la revendication 7, caractérisée en ce que le support organique est un polymère naturel ou synthétique.

10. Phase stationnaire chirale selon la revendication 9, caractérisée en ce que le support organique est un polymère acrylique.

11. Phase stationnaire chirale selon l'une des revendications 5 ou 6, caractérisée en ce que le support est fonctionnalisé par introduction d'un groupement portant une double liaison carbone-carbone.

12. Phase stationnaire chirale selon l'une des revendications 5 à 11, caractérisée en ce que la granulométrie du support est comprise entre 3 et 60 µm.

13. Phase stationnaire chirale selon l'une des revendications 5 à 12, caractérisée en ce que la quantité de polysaccharide liée au support est comprise entre 1 et 50 % en poids.

14. Phase stationnaire chirale utile pour la séparation des isomères d'un composé racémique, caractérisée en ce qu'elle est constituée par un polysaccharide obtenu sous forme de microbilles puis réticulé à sec, le dit polysaccharide étant choisi parmi les polysaccharides définis dans la revendication 1, étant entendu que A₂ peut être choisi en outre parmi les radicaux alkyles linéaires ou ramifiés ayant de 1 à 24 atomes de carbone.

15. Phase stationnaire chirale selon l'une des revendications 5 ou 14, caractérisée en ce que, dans la formule du polysaccharide, l'un au moins des symboles R₁, R₂ ou R₃ représente un radical de formule générale (III) dans lequel A₂ représente un radical aryle ayant de 6 à 24 atomes de carbone ou un radical aralkyle ayant de 7 à 36 atomes de carbone ou un radical alkylaryle ayant de 7 à 18 atomes de carbone.

## Claims

1. Polysaccharide consisting of structural units forming a linear or branched chain and which can be represented by one of the general formulae below: 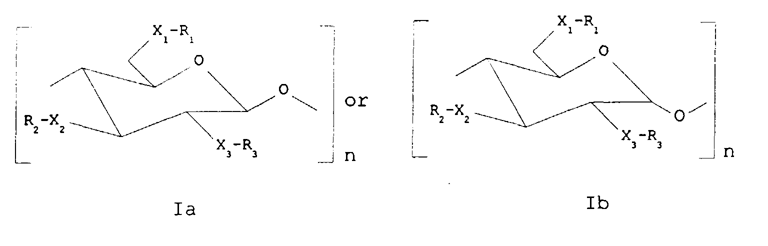 in which:
a) the symbols X₁, X₂ and X₃, which may be identical or different, represent an oxygen atom or an -NH group;
b) each of the symbols R₁, R₂ and R₃ independently represents
- an ethylenic radical having the general formula R-(CH=CH-CH₂)ₘ-A-Y- (II) in which m is a non-zero integer of not more than 5, R represents a hydrogen atom or a substituted or unsubstituted, linear or branched alkyl radical containing 1 to 8 carbon atoms, Y represents a single bond or an -NH-CO- group or an -NH-CS- group or a -CO- group, A represents a single bond or a linear or branched alkylene radical containing from 1 to 21 carbon atoms, or an arylene radical containing from 6 to 18 carbon atoms and optionally bearing at least one substituent chosen from halogen atoms, alkyl radicals containing 1 to 4 carbon atoms, alkoxy radicals containing 1 to 4 carbon atoms and nitro groups or an aralkylene radical containing from 7 to 40 carbon atoms,
- or a radical having the formula A₂-A₁-CX- (III) in which X represents an oxygen or sulphur atom, A₁ represents a single bond or an -NH- group and A₂ represents an aryl radical containing from 6 to 24 carbon atoms and optionally bearing at least one substituent chosen from halogen atoms, alkyl radicals containing 1 to 4 carbon atoms, alkoxy radicals containing 1 to 4 carbon atoms and nitro groups or an aralkyl radical containing from 7 to 36 carbon atoms or an alkylaryl radical containing from 7 to 18 carbon atoms,
- or a hydrogen atom or an NO₂ group,
n being an integer between 5 and 2000, it being understood that, in each structural unit Ia or Ib, at least one of the symbols X₁, X₂ and X₃ represents an oxygen atom, and that, in at least some of the structural units constituting the polysaccharide, at least one of the symbols R₁, R₂ and R₃ represents a radical of general formula (II) and at least one of the symbols R₁, R₂ and R₃ represents a radical of general formula (III).

2. Polysaccharide according to Claim 1, characterized in that the aryl radicals are phenyl or naphthyl radicals and/or the arylene radicals are phenylene or naphthylene radicals.

3. Polysaccharide according to either of Claims 1 and 2, characterized in that the degree of polymerization is between 5 and 2000.

4. Polysaccharide according to one of Claims 1 to 3, characterized in that it contains from 0.05 to 2.95 groups of general formula (II) per structural unit and from 0.05 to 2.95 groups of general formula (III) per structural unit.

5. Chiral stationary phase which is useful for separating the isomers of a racemic compound according to chromatographic techniques, which can be obtained from a polysaccharide fixed by covalent bonding or by crosslinking to an optionally functionalized support, the said polysaccharide being chosen from the polysaccharides defined in Claim 1, it being understood that A₂ can also be chosen from linear or branched alkyl radicals containing from 1 to 24 carbon atoms.

6. Chiral stationary phase according to Claim 5, characterized in that, in the formula for the polysaccharide, at least one of the symbols R₁, R₂ and R₃ represents a radical of general formula (III) in which A₂ represents an aryl radical containing from 6 to 24 carbon atoms or an aralkyl radical containing from 7 to 36 carbon atoms or an alkylaryl radical containing from 7 to 18 carbon atoms.

7. Chiral stationary phase according to either of Claims 5 and 6, characterized in that the support is an inorganic or organic support.

8. Chiral stationary phase according to Claim 7, characterized in that the inorganic support is chosen from silica, alumina and graphite.

9. Chiral stationary phase according to Claim 7, characterized in that the organic support is a natural or synthetic polymer.

10. Chiral stationary phase according to Claim 9, characterized in that the organic support is an acrylic polymer.

11. Chiral stationary phase according to either of Claims 5 and 7, characterized in that the support is functionalized by introducing a group bearing a carbon-carbon double bond.

12. Chiral stationary phase according to one of Claims 5 to 11, characterized in that the particle size of the support is between 3 and 60 µm.

13. Chiral stationary phase according to one of Claims 5 to 12, characterized in that the amount of polysaccharide linked to the support is between 1 and 50% by weight.

14. Chiral stationary phase which is useful for separating the isomers of a racemic compound, characterized in that it consists of a polysaccharide obtained in the form of microbeads and then dry-crosslinked, the said polysaccharide being chosen from the polysaccharides defined in Claim 1, it being understood that A₂ can also be chosen from linear or branched alkyl radicals containing from 1 to 24 carbon atoms.

15. Chiral stationary phase according to either of Claims 5 and 14, characterized in that, in the formula for the polysaccharide, at least one of the symbols R₁, R₂ and R₃ represents a radical of general formula (III) in which A₂ represents an aryl radical containing from 6 to 24 carbon atoms or an aralkyl radical containing from 7 to 36 carbon atoms or an alkylaryl radical containing from 7 to 18 carbon atoms.

## Patentansprüche

1. Polysaccharid, bestehend aus Struktureinheiten, die eine unverzweigte oder verzweigte Kette bilden und die durch eine der folgenden allgemeinen Formeln dargestellt werden können: 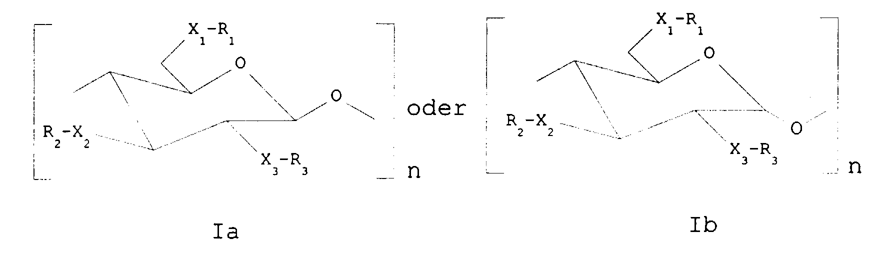 worin:
a) die Symbole X₁, X₂ und X₃, die identisch oder voneinander verschieden sein können, ein Sauerstoffatom oder die Gruppe -NH darstellen;
b) die Symbole X₁, X₂ und X₃ jeweils unabhängig voneinander Folgendes darstellen:
- einen ethylenischen Rest mit der allgemeinen Formel R-(CH=CH-CH₂)ₘ-A-Y- (II), worin m eine ganze Zahl ungleich 0 und maximal gleich 5 ist, R für ein Wasserstoff-atom oder einen unverzweigten oder verzweigten, substituierten oder nicht-substituierten Alkylrest mit 1 bis 8 Kohlenstoffatomen steht, Y für eine Einfachbindung oder eine Gruppe -NH-CO- oder eine Gruppe -NH-CS- oder eine Gruppe -CO- steht, A für eine Einfachbindung oder einen unverzweigten oder verzweigten Alkylenrest mit 1 bis 21 Kohlenstoffatomen steht, oder für einen Arylenrest mit 6 bis 18 Kohlenstoffatomen, der gegebenenfalls zumindest einen Substituenten, ausgewählt aus Halogenatomen, Alkylresten mit 1 bis 4 Kohlenstoffatomen, Alkoxyresten mit 1 bis 4 Kohlenstoffatomen und Nitrogruppen, aufweist, oder einen Aralkylenrest mit 7 bis 40 Kohlenstoffatomen;
- oder einen Rest der Formel A₂-A₁-CX- (III), worin X für ein Sauerstoff- oder ein Schwefelatom steht, A₁ für eine Einfachbindung oder eine Gruppe -NH- steht und A₂ für einen Arylrest mit 6 bis 24 Kohlenstoffatomen steht, der gegebenenfalls zumindest einen Substituenten, ausgewählt aus Halogenatomen, Alkylresten mit 1 bis 4 Kohlen-stoffatomen, Alkoxyresten mit 1 bis 4 Kohlenstoffatomen und Nitrogruppen, aufweist, oder für einen Aralkylrest mit 7 bis 36 Kohlenstoffatomen oder einen Alkylarylrest mit 7 bis 18 Kohlenstoffatomen;
- oder ein Wasserstoffatom oder eine NO₂-Gruppe;
n eine ganze Zahl zwischen 5 und 2000 ist, wobei zu beachten ist, dass in jeder Struktureinheit Ia oder Ib zumindest eines von X₁, X₂ und X₃ für ein Sauerstoffatom steht und dass in zumindest einem Teil der Struktureinheiten, die das Polysaccharid bilden, zumindest eines von R₁, R₂ und R₃ für einen Rest der allgemeinen Formel (II) steht und zumindest eines von R₁, R₂ und R₃ für einen Rest der allgemeinen Formel (III) steht.

2. Polysaccharid nach Anspruch 1, dadurch gekennzeichnet, dass die Arylreste Phenyl- oder Naphthylreste sind und/oder die Arylenreste Phenylen- oder Naphthylenreste sind.

3. Polysaccharid nach einem der Ansprüche 1 oder 2, dadurch gekennzeichnet, dass der Polymerisationsgrad zwischen 5 und 2.000 liegt.

4. Polysaccharid nach einem der Ansprüche 1 bis 3, dadurch gekennzeichnet, dass es 0,05 bis 2,95 Gruppen der allgemeinen Formel (II) pro Struktureinheit und 0,05 bis 2,95 Gruppen der allgemeinen Formel (III) pro Struktureinheit enthält.

5. Chirale stationäre Phase, die zur Trennung von Isomeren einer racemischen Verbindung durch Chromatographietechniken dient und ausgehend von einem durch kovalente Bindung oder durch Vernetzung auf einem gegebenenfalls funktionalisierten Träger fixierten Polysaccharid erhältlich ist, wobei das Polysaccharid aus den in Anspruch 1 definierten Polysacchariden ausgewählt ist, wobei zu beachten ist, dass A₂ außerdem aus unverzweigten oder verzweigten Alkylresten mit 1 bis 24 Kohlenstoffatomen ausgewählt sein kann.

6. Chirale stationäre Phase nach Anspruch 5, dadurch gekennzeichnet, dass in der Formel des Polysaccharids zumindest eines von R₁, R₂ oder R₃ für einen Rest der allgemeinen Formel (III) steht, A₂ für einen Arylrest mit 6 bis 24 Kohlenstoffatomen oder einen Aralkylrest mit 7 bis 36 Kohlenstoffatomen oder einen Alkylarylrest mit 7 bis 18 Kohlenstoffatomen steht.

7. Chirale stationäre Phase nach einem der Ansprüche 5 oder 6, dadurch gekennzeichnet, dass der Träger ein mineralischer oder organischer Träger ist.

8. Chirale stationäre Phase nach Anspruch 7, dadurch gekennzeichnet, dass der mineralische Träger aus Kieselerde, Tonerde und Graphit ausgewählt ist.

9. Chirale stationäre Phase nach Anspruch 7, dadurch gekennzeichnet, dass der organische Träger ein natürliches oder synthetisches Polymer ist.

10. Chirale stationäre Phase nach Anspruch 9, dadurch gekennzeichnet, dass der organische Träger ein Acrylpolymer ist.

11. Chirale stationäre Phase nach einem der Ansprüche 5 oder 7, dadurch gekennzeichnet, dass der Träger durch Einführung einer Gruppe funktionalisiert ist, die eine Kohlenstoft-Kohlenstoff-Doppelbindung aufweist.

12. Chirale stationäre Phase nach einem der Ansprüche 5 bis 11, dadurch gekennzeichnet, dass die Korngröße des Trägers zwischen 3 und 60 µm liegt.

13. Chirale stationäre Phase nach einem der Ansprüche 5 bis 12, dadurch gekennzeichnet, dass die Menge des an den Träger gebundenen Polysaccharids zwischen 1 und 50 Gew.-% liegt.

14. Chirale stationäre Phase, die zur Trennung von Isomeren einer racemischen Verbindung dient, dadurch gekennzeichnet, dass sie aus einem Polysaccharid besteht, das in Form von Mikrokügelchen erhalten und dann trockenvernetzt wird, wobei das Polysaccharid aus den in Anspruch 1 definierten Polysacchariden ausgewählt ist, wobei zu beachten ist, dass A₂ außerdem aus unverzweigten oder verzweigten Alkylresten mit 1 bis 24 Kohlenstoffatomen ausgewählt sein kann.

15. Chirale stationäre Phase nach einem der Ansprüche 5 oder 14, dadurch gekennzeichnet, dass in der Formel des Polysaccharids, zumindest eine von R₁, R₂ oder R₃ für einen Rest der allgemeinen Formel (III) steht, worin A₂ für einen Arylrest mit 6 bis 24 Kohlenstoffatomen oder einen Aralkylrest mit 7 bis 36 Kohlenstoffatomen oder einen Alkylarylrest mit 7 bis 18 Kohlenstoffatomen steht.
